# EUROPÄISCHE PATENTSCHRIFT

(11) **EP 2 918 447 B1**
(45) Veröffentlichungstag und Bekanntmachung des Hinweises auf die Patenterteilung: **11.04.2018**
(21) Anmeldenummer: 15158328.3
(22) Anmeldetag: 10.03.2015
(51) Int. Cl.: B60Q 1/076

(54) **Einstellvorrichtung für einen Fahrzeugscheinwerfer**
Adjustment device for a motor vehicle headlamp
Dispositif de réglage pour un phare de véhicule

(30) Priorität: 10.03.2014 AT 501752014
(43) Veröffentlichungstag der Anmeldung: 16.09.2015
(73) Patentinhaber: ZKW Group GmbH, 3250 Wieselburg (AT)
(72) Erfinder: Hloska, Branislav, 900 31 Stupava (SK)
(74) Vertreter: Patentanwaltskanzlei Matschnig & Forsthuber OG

(56) Entgegenhaltungen:
- EP-A1- 0 705 729
- EP-A1- 2 881 283
- DE-A1- 10 332 976

## Beschreibung

Die Erfindung betrifft eine Einstellvorrichtung zur Einstellung eines optisch relevanten Bauteils eines Fahrzeugscheinwerfers, aufweisend ein mittels eines Stellmotors entlang einer Verschubachse verschiebbares Aktorelement, ein mit dem Aktorelement verbundenes, zur Verschiebung entlang der Verschubachse eingerichtetes und um die Verschubachse drehbar gelagertes Übertragungselement, ein mit dem Übertragungselements mittels einer Verbindung in mechanischem Eingriff stehendes Stellelement, wobei das Stellelement dazu eingerichtet ist, an dem optisch relevanten Bauteil anzugreifen, und ein zur Drehung des Übertragungselements eingerichtetes, um die Verschubachse drehbar gelagertes Drehelement.

Einstellvorrichtungen zu Einstellung von optisch relevanten Bauteilen von Scheinwerfern, wie beispielsweise Lichtquellen, Reflektoren und/oder Linsen erlauben eine Anpassung des durch den Scheinwerfer erzeugten Lichtbildes an vorgebebene Anforderungen. Dies erlaubt es, Abweichungen von Sollvorgaben, die beispielsweise nach einem Einbauvorgang des Scheinwerfers in ein Kraftfahrzeug festgestellt werden, nachträglich durch Verwendung einer Einstellvorrichtung ausgeglichen werden können. Eine typische Aufgabe von Einstellvorrichtungen liegt in der Anpassung der Leuchtweite eines Scheinwerfers, wobei dieses technische Gebiet insbesondere unter dem Ausdruck "Leuchtweitenregulierung" bekannt geworden ist.

Einstellvorrichtungen, die beispielsweise bei gängigen Leuchtweitenregulierungssystemen eingesetzt werden, verfügen zumeist über einen verschiebbar montierten Stellmotor mit einem Aktorelement, wobei das Aktorelement dazu eingerichtet ist, an einem optisch relevanten Bauteil des Scheinwerfers anzugreifen. Der Stellmotor erlaubt dabei eine automatische Einstellung des optisch relevanten Bauteils. Zur Grundeinstellung einer solchen Einstellvorrichtung ist häufig eine Justiermechanik vorgesehen, die dazu eingerichtet ist den Stellmotor mitsamt dem Aktorelement entlang von Gleitbahnen zu verschieben. Dabei steht der Stellmotor beispielsweise mit einer über ein Kegelradgetriebe angetriebenen Spindel dergestalt in mechanischen Eingriff, sodass eine Drehung eines in einem Außenbereich eines Scheinwerfers gehaltenen Kegelrades die Spindel in Rotation versetzt wird und dabei den Stellmotor mitsamt dem Aktorelement verschiebt. Auf diese Art kann in sehr einfacher Weise eine Grundeinstellung eines Fahrzeugscheinwerfers vorgenommen werden.

Ein Nachteil bekannter Einstellvorrichtungen besteht darin, dass die Verstellmechanik zur Grundeinstellung des Stellmotors mitsamt dem Aktorelement eine aufwändige Fertigung bedarf, da diese aus mehreren Bauteilen besteht, bei denen darin wirkende Kräfte häufig mehrfach umgelenkt werden. Der Stellmotor ist dabei in Gleitbahnen gehalten, die eine Verschiebung des Stellmotors ermöglichen. Auftretende Querkräfte können unter Umständen zu einem Verkanten des Stellmotors und/ oder des Aktorelements führen, weshalb die Gleitbahnen unter Umständen zusätzlich geschmiert werden müssen. Eine gattungsgemäße Einstellvorrichtung ist aus der DE 103 32 976 A1 bekannt.

Es ist daher eine Aufgabe der Erfindung eine Einstellvorrichtung zur Einstellung eines optisch relevanten Bauteils eines Fahrzeugscheinwerfers zu schaffen, die eine robuste, effiziente und kostengünstige Einstellung des optisch relevanten Bauteils erlaubt.

Diese Aufgabe wird mit einer Einstellvorrichtung gemäß Anspruch 1 gelöst. Dabei sind das Stellelement, das Übertragungselement und Drehelement als gesonderte Bauteile ausgeführt. Das Drehelement ist im Gegensatz zu dem Übertragungselement nicht entlang der Schubachse verschiebbar, sondern lediglich um die Schubachse drehbar. Eine Schiebebewegung des Stellelements entlang der Verschubachse kann daher relativ zum Drehelement erfolgen. Zudem ist die das Übertragungselement mit dem Stellelement verbindende Verbindung dazu eingerichtet, eine Drehbewegung des Übertragungselements in eine Schiebebewegung des Stellelements entlang der Verschubachse relativ zu dem Übertragungselement zu wandeln. Das Stellelement greift dergestalt an einem optisch relevanten Bauteil an, sodass eine Bewegung des Stellelements in eine geänderte Ausrichtung des optisch relevanten Bauteils gewandelt werden kann. Bei dem optisch relevanten Bauteil kann es sich beispielsweise um Blenden(anordnungen), Lichtquellen, Reflektoren, Linsen, ganze Lichtmodule bzw. Baugruppen, etc. handeln. Ebenso ist es möglich, dass ein optisch relevanter Bauteil in einer Verstellmechanik, beispielsweise in einem schwenkbar gelagerten Rahmen aufgenommen ist. Unter dem Ausdruck, dass "das Stellelement dazu eingerichtet ist, an dem optisch relevanten Bauteil anzugreifen" wird daher auch eine Anordnung verstanden, in der das Stellelement indirekt (beispielsweise über eine Verstellmechanik) an dem optisch relevanten Bauteil angreift.

Dank der Erfindung ist es möglich, eine besonders robuste und fein justierbare Einstellvorrichtung zu erhalten, die kostengünstig realisierbar ist und innerhalb der Einstellvorrichtung auftretende Querkräfte weitgehend minimiert. Der Stellmotor kann ortsfest in einem Gehäuse verbaut werden. Eine Grundeinstellung des Stellelements kann ohne einer Verschiebung des Stellmotors erfolgen, wodurch auf zusätzliche in einem Gehäuse angeordnete Gleitbahnen verzichtet werden kann und die Zuverlässigkeit der erfindungsgemäßen Einstellvorrichtung besonders hoch ist. Abträgliche Einflüsse aufgrund von Fertigungsungenauigkeiten und/ oder thermischer Ausdehnung beteiligter Bauteile werden zudem minimiert.

In einer vorteilhaften Ausführungsform kann es vorgesehen sein, dass das Stellelement, das Übertragungselement und das Drehelement koaxial zur Verschubachse angeordnet sind. Dadurch wird eine besonders effiziente Kraftübertragung ermöglicht und die Starrheit der Einstellvorrichtung erhöht.

In einer besonders einfachen und effizienten Weiterbildung der Erfindung ist die das Übertragungselement mit dem Stellelement verbindende Verbindung in Form einer Gewindeverbindung ausgeführt, wobei das Übertragungselement einen Gewindeabschnitt und das Stellelement einen dazu korrespondierenden Gegengewindeabschnitt aufweist.

Zudem ist es vorteilhaft, wenn das Stellelement Führungsmittel aufweist, die das Stellelement gegen ein Verdrehen um die Verschubachse sichern. Eine Drehbewegung des Übertragungselements kann somit besonders zuverlässig und exakt in eine Schiebebewegung des Stellelements gewandelt werden.

Um den Maximalhub des Stellelements in Bezug auf das Übertragungselements zu begrenzen und ein unerwünschtes Lösen der Verbindung des Stellelements mit dem Übertragungselement zu vermeiden, kann es vorteilhaft sein, wenn die Drehbewegung des Übertragungselements mittels mechanischer Anschläge begrenzt ist.

Ein besonders robuster und einfacher Aufbau einer Einstellvorrichtung kann erhalten werden, indem der Stellmotor, das Aktorelement, das Übertragungselement, das Drehelement und das Stellelement zumindest teilweise innerhalb eines Gehäuses aufgenommen sind.

Dabei ist es besonders vorteilhaft, wenn das Gehäuse im Wesentlichen halbschalenförmig ausgebildet ist. Dies erlaubt einen besonders einfachen Zusammenbau der erfindungsgemäßen Einstellvorrichtung. Insbesondere kann es dabei vorgesehen sein, dass das Drehelement in einem innerhalb des Gehäuses angeordneten Halbschalenlager gelagert ist.
In einer besonders günstigen Ausgestaltung der Erfindung weist das Stellelement Führungsmittel auf, die das Stellelement gegen ein Verdrehen um die Verschubachse sichern, wobei die Führungsmittel in zu den Führungsmitteln korrespondierenden, innerhalb des Gehäuses angeordneten Ausnehmungen und/oder Vorsprünge eingreifen.
Um einen besonders günstigen Einbau der Einstellvorrichtung zu ermöglichen, kann es vorgesehen sein, dass der Stellmotor sowie das Gehäuse jeweils zumindest eine, vorzugsweise zwei Befestigungslaschen aufweisen, wobei die Befestigungslaschen des Gehäuses und des Stellmotors einander in einem eingebauten Zustand der Einstellvorrichtung überlappen.
In einer besonders einfachen Ausführungsform weist das Übertragungselement und/ oder das Aktorelement eine Rastvorrichtung zur Verbindung des Übertragungselements mit dem Aktorelement auf. Erfindungsgemäß ist das Übertragungselement zumindest teilweise in einer im Wesentlichen kreisförmigen konzentrisch zur Verschubachse angeordneten Öffnung des Drehelements aufgenommen sein. Dadurch ist ein besonders kompakter Aufbau der erfindungsgemäßen Einstellvorrichtung möglich. Erfindungsgemäß weist das Übertragungselement dabei elastische Mittel auf, die am Umfang eines fiktiven, konzentrisch zur Verschubachse angeordneten Kreises angeordnet sind und sich entlang der Verschubachse erstrecken, wobei die elastischen Mittel Vorsprünge aufweisen, die dazu eingerichtet sind in innerhalb der Öffnung angeordnete korrespondierende Vertiefungen einzugreifen. Auf diese Weise kann eine Drehmomentbegrenzung realisiert werden. Ist beispielsweise der Maximalhub des Stellelements in Bezug auf das Übertragungselement erreicht, so kann eine mechanische Überlastung ihrer Verbindung verhindert werden, indem sich ab einen definierten Drehmoment die elastischen Mittel dergestalt verformen, dass diese aus den korrespondierenden Vertiefungen gleiten und ein "Durchdrehen" des Drehelements in Bezug auf das Übertragungselements ermöglichen. In einer besonders einfachen und effektiven Weiterbildung können dabei die elastischen Mittel zungenartig ausgebildet sein, wobei die Vorsprünge in Form von achsparallelen Zapfen ausgeführt sind und die dazu korrespondierenden Vertiefungen als achsparallele Rillen ausgeführt sind.
In einer besonders einfachen Ausführung der Erfindung weist das Stellelement zum Eingriff an dem optisch relevanten Bauteil eines Scheinwerfers einen Kopplungsbereich auf. Es ist dabei besonders vorteilhaft, wenn der Kopplungsbereich durch einen konzentrisch zur Verschubachse angeordneten Kugelkopf gebildet ist. Dadurch wird eine besonders effiziente und robuste Kraftübertragung auf den optisch relevanten Bauteil ermöglicht.
In einer besonders günstigen Ausgestaltung der Erfindung weist das Drehelement in einem außerhalb der Öffnung liegenden Bereich eine Verzahnung, insbesondere ein Tellerrad auf. Ein mechanischer Eingriff in das Drehelement ist somit besonders einfach möglich. Insbesondere kann es dabei vorgesehen sein, dass ein Kegelritzel zum Eingriff in die Verzahnung vorgesehen ist. Besonders vorteilhaft ist es dabei, wenn die Drehachse des Kegelritzels im Wesentlichen normal (rechtwinkelig) zur Verschubachse orientiert ist. So kann eine z.B. ein an einer horizontal orientierten Verschubachse ausgerichtetes Drehelement durch ein vertikal orientiertes Kegelritzel angetrieben werden. Dies ist bei Scheinwerfern von besonderer Bedeutung, da z.B. ein einfacher Zugang bzw. eine einfache Einstellung der Einstellvorrichtung besonders wünschenswert ist, wobei in dieser Konfiguration beispielsweise eine besonders einfache Einstellung von Einstellvorrichtungen mit horizontaler Verschubachse über eine Oberseite eines Scheinwerfergehäuses ermöglicht werden kann.
In einer besonders vorteilhaften Ausführungsform der Erfindung kann vorgesehen sein, dass der Stellmotor, das Aktorelement, das Übertragungselement, das Drehelement und das Stellelement zumindest teilweise innerhalb eines Gehäuses aufgenommen sind, wobei das Kegelritzel in dem Gehäuse gelagert ist.
Um die Einstellvorrichtung möglichst effizient von der Umgebung abzuschirmen und beispielsweise unerwünschten Wassereintritt in die Einstellvorrichtung sowie insbesondere in ein die Einstellvorrichtung aufnehmendes Scheinwerfergehäuse zu verhindern, kann es vorgesehen sein, dass das Kegelritzel mittels eines oberhalb des Gehäuses liegendem Dichtrings umschlossen ist.

In einer besonders günstigen Ausführungsform der Erfindung ist das Stellelement aus PA 6.6 (Polyamid 6.6) hergestellt ist. Das Stellelement weist dadurch besonders gute Gleiteigenschaften auf, wodurch auf eine Schmierung zwischen dem Übertragungselement und dem Stellelement verzichtet werden kann.

Des Weiteren kann es vorgesehen sein, dass das das Drehelement aus PBT (Polybutylenterephthalat) mit einem Gewichtsanteil von ca. 20 bis 40 % Glasfaser hergestellt ist. Das Drehelement ist dadurch besonders robust.

Außerdem kann es vorgesehen sein, dass das Übertragungselement aus POM (Polyoxymethylen) hergestellt ist. Das Übertragungselement hält dadurch bei hoher Elastizität großen mechanischen Belastungen stand.

Des Weiteren kann es vorgesehen sein, dass das Gehäuse aus PBT (Polybutylenterephthalat) mit einem Gewichtsanteil von ca. 20 bis 40 % Glasfaser hergestellt ist. Das Gehäuse ist dadurch besonders fest und hält hohen mechanischen Beanspruchungen stand.

Insbesondere kann es vorgesehen sein, dass das Kegelritzel aus PA 6 (Polyamid 6) mit einem Gewichtsanteil von ca. 20 bis 40% Glasfaser hergestellt ist. Das Kegelritzel ist dadurch besonders robust und gleichzeitig günstig herstellbar.

Des Weiteren betrifft die Erfindung einen Fahrzeugscheinwerfer mit einer erfindungsgemä-ßen Einstellvorrichtung.

Die Erfindung samt weiteren Ausgestaltungen und Vorteilen ist im Folgenden an Hand einer beispielhaften, nicht einschränkenden Ausführungsform näher erläutert, die in den Figuren veranschaulicht ist. Hierbei zeigt
Fig. 1 eine perspektivische Darstellung einer erfindungsgemäßen Einstellungsvorrichtung,
Fig. 2 eine Seitenansicht der Einstellungsvorrichtung,
Fig. 3 eine Explosionsdarstellung der Einstellungsvorrichtung,
Fig. 4 eine Schnittdarstellung der Einstellvorrichtung,
Fig. 5 eine perspektivische Darstellung einzelner Bauteile der Einstellvorrichtung,
Fig. 6 und 7 perspektivische Darstellungen eines Stellelements,
Fig. 8 eine perspektivische Darstellung des mit einem Übertragungselement verkoppelten Stellelements,
Fig. 9 eine Schnittdarstellung des in einem Gehäuse aufgenommenen Stellelements,
Fig. 10 eine perspektivische Teilschnittdarstellung der Einstellvorrichtung,
Fig. 11 den Einbau des Drehelements in ein Gehäuse und
Fig. 12 eine perspektivische Darstellung der Einstellvorrichtung in einem Ausschnitt eines Scheinwerfergehäuses.

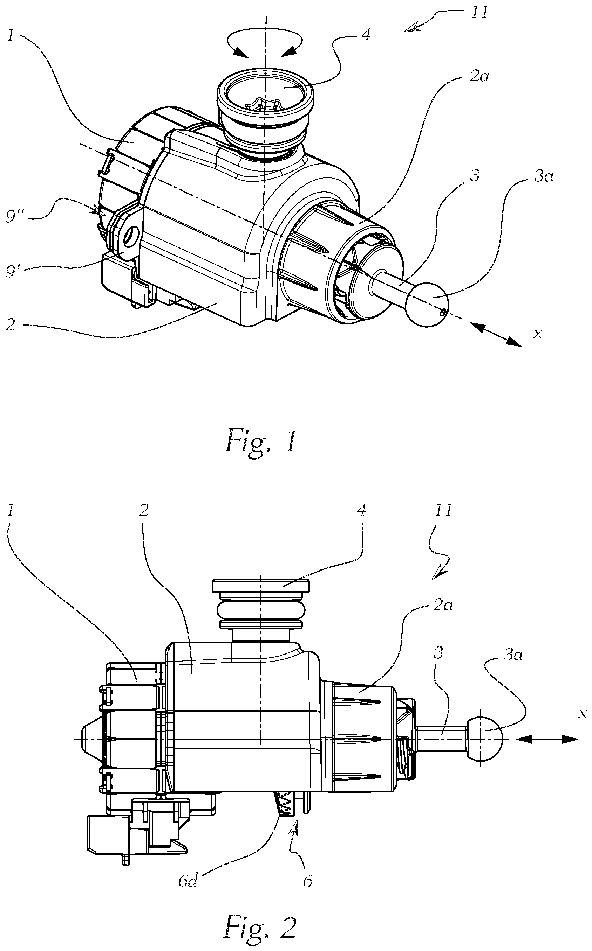

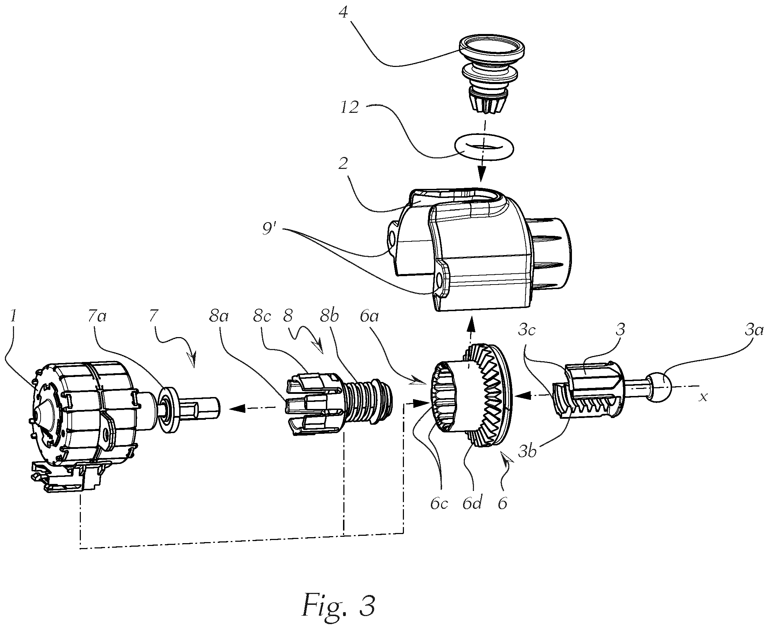

Fig. 1 zeigt eine perspektivische Darstellung einer erfindungsgemäßen Einstellungsvorrichtung 11. Die Einstellvorrichtung 11 umfasst darin einen Stellmotor 1, der in einem Gehäuse 2 aufgenommen ist, wobei ein Stellelement 3 zumindest teilweise aus dem Gehäuse 2 ragt. Die Einstellvorrichtung 11 ist zur Einstellung eines optisch relevanten Bauteils (in den Figuren nicht dargestellt) eines Fahrzeugscheinwerfers eingerichtet, wobei die Einstellvorrichtung 11 ein mittels des Stellmotors 1 entlang einer Verschubachse x verschiebbares Aktorelement 7 (siehe z.B. Fig. 3), ein mit dem Aktorelement 7 verbundenes, zur Verschiebung entlang der Verschubachse x eingerichtetes und um die Verschubachse x drehbar gelagertes Übertragungselement 8 (siehe z.B. Fig. 3), das Stellelement 3 und ein zur Drehung des Übertragungselements 8 eingerichtetes, um die Verschubachse x drehbar gelagertes Drehelement 6 (siehe z.B. Fig. 2 und 3) aufweist. Das Stellelement 3 steht mit dem Übertragungselements 8 mittels einer Verbindung 8b und 3b (siehe z.B. Fig. 3) in mechanischem Eingriff und ist dazu eingerichtet, an dem optisch relevanten Bauteil anzugreifen. Zu diesem Zweck weist das Stellelement 3 einen Kopplungsbereich auf, der vorzugsweise als konzentrisch zur Verschubachse x angeordneter Kugelkopf 3a ausgebildet ist.

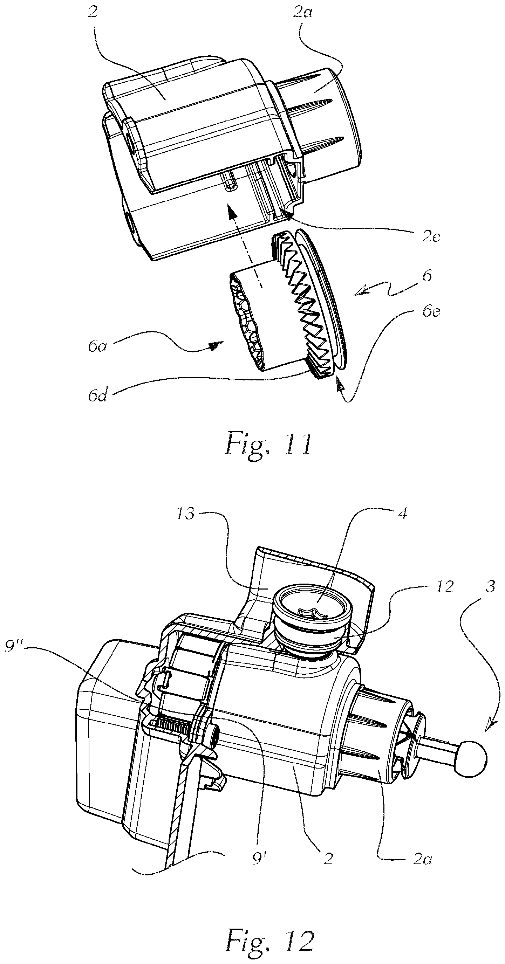

Das Gehäuse 2 weist Befestigungslaschen 9' auf, die in einem montierten Zustand (siehe Fig. 12) mit korrespondierenden Befestigungslaschen 9" des Stellmotors 1 verbunden und gemeinsam in einem Scheinwerfergehäuse festgehalten sind (vorzugsweise über eine Schraubverbindung). An einer Oberseite des Gehäuses 2 ist ein Kegelritzel 4 dargestellt, welches dazu eingerichtet ist, das Drehelement 6 in nachfolgend beschriebener Weise anzutreiben.

Fig. 2 zeigt eine Seitenansicht der Einstellungsvorrichtung 11, wobei darin gut erkennbar ist, dass sich die Verschubachse x durch eine Symmetrieachse des Stellmotors 1 sowie des Drehelements 6 und des Stellelements 3 erstreckt. Wie in den nachfolgenden Figuren noch diskutiert, sind in dieser vorteilhaften Ausführungsform der Einstellungsvorrichtung 11 sowohl der Stellmotor 1, das Aktorelement 7, das Übertragungselement 8, das Drehelement 6 sowie das Stellelement 3 koaxial zur Verschubachse x angeordnet.

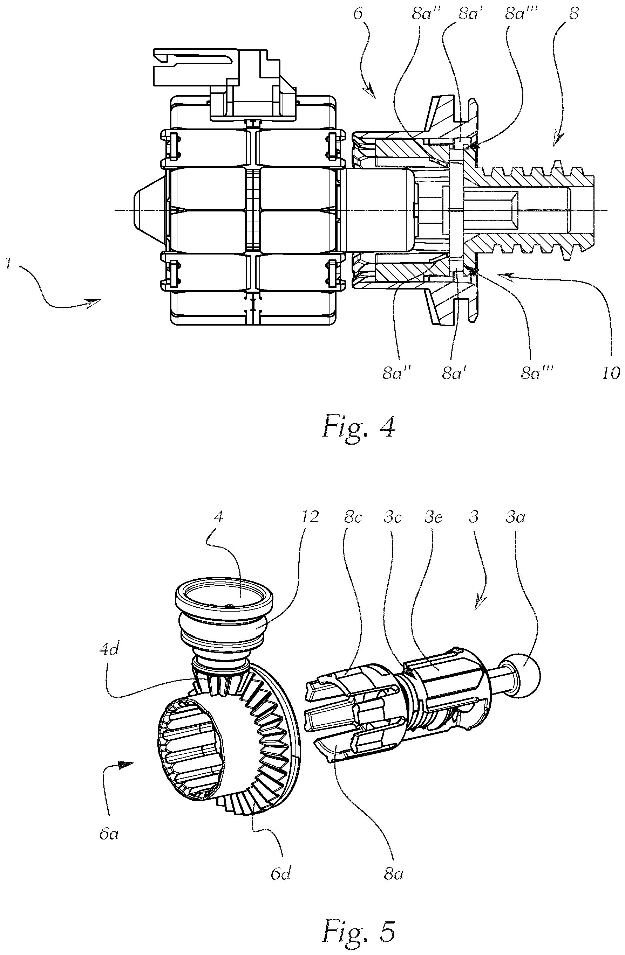

Fig. 3 offenbart eine Explosionsdarstellung der Einstellungsvorrichtung 11, die die einzelnen Bestandteile der Einstellungsvorrichtung 11 sowie deren Zusammenbau veranschaulicht. Der Stellmotor 1 weist darin das Aktorelement 7 auf, dass mithilfe des Stellmotors 1 vorzugsweise linear entlang der Verschubachse x bewegt werden kann. Das Aktorelement 7 ist hierzu fest mit einem Antrieb des Stellmotors 1 verbunden. Das Übertragungselement 8 ist dazu eingerichtet, auf einem Haltering 7a des Aktorelements 7 festzurasten, wobei das Übertragungselement 8 elastische Mittel 8a in Form von einzelnen Zungen aufweist, die am Umfang eines fiktiven, konzentrisch zur Verschubachse x angeordneten Kreises angeordnet sind und sich entlang der Verschubachse x erstrecken. Innerhalb der elastischen Mittel 8a ist eine in Fig. 4 dargestellte ringförmige Nut 8a' vorgesehen, die durch eine Fixierungsschräge 8a" sowie eine der Fixierungsschräge 8a" gegenüberliegende Auflagefläche 8a'" begrenzt ist. Das Übertragungselement 8 kann mit dem Aktorelement 7 verbunden werden, indem das Übertragungselement 8 auf das Aktorelement 7 aufgeschoben wird, sodass ein an dem Aktorelement 7 konzentrisch angeordneter Fixierring 7a in das Übertragungselement 8 eingeschoben wird und dabei die Fixierungsschräge 8a" überwindet und somit zwischen der Fixierungsschräge 8a" und der Auflagefläche 8a'" festgehalten wird. Dadurch ist das Übertragungselement 8 mit dem Aktorelement 7 in Bezug auf Verschiebungsbewegungen entlang der Verschubachse x im Wesentlichen starr verbunden, wohingegen eine Drehbewegung des Übertragungselements 8 in Bezug auf das Aktorelement 7 um die Verschubachse x weiterhin möglich ist. Der Fixierring 7a bildet daher mit der Fixierungsschräge 8a" und den Auflagefläche 8a'" gemeinsam eine Rastvorrichtung 10 (siehe Fig. 4).

Die elastischen Mittel 8a des Übertragungselements 8 weisen zudem Vorsprünge 8c auf, die dazu eingerichtet sind, in innerhalb einer im Wesentlichen kreisförmigen zur Verschubachse x konzentrischen Öffnung 6a des Drehelements 6 angeordnete korrespondierende Vertiefungen 6c einzugreifen, wobei die Vorsprünge 8c vorzugsweise in Form von achsparallelen Zapfen ausgeführt sind und die dazu korrespondierenden Vertiefungen 6c als achsparallele Rillen ausgeführt sind. Im zusammengebauten Zustand ist das Übertragungselement 8 in der Öffnung 6a des Drehelements 6 aufgenommen, wobei die Vorsprünge 8c in die Vertiefungen 6c dergestalt eingreifen, dass eine Verschiebung des Übertragungselements 8 in Bezug auf des Drehelement 6 entlang der Verschubachse x möglich ist. Eine Drehbewegung des Drehelements 6 um die Verschubachse x wird über die Vertiefungen 6c mittels der Vorsprünge 8c auf das Übertragungselement 8 übertragen, sofern das dabei übertragene Drehmoment ein maximales Begrenzungsdrehmoment nicht überschreitet. Ist beispielsweise der Maximalhub des Stellelements 3 in Bezug auf das Übertragungselement 8 erreicht, so kann eine mechanische Überlastung ihrer Verbindung verhindert werden, indem sich ab einen definierten Drehmoment die elastischen Mittel 8a dergestalt verformen, dass die Vorsprünge 8c aus den korrespondierenden Vertiefungen 6c gleiten und ein "Durchdrehen" des Drehelements 6 in Bezug auf das Übertragungselements 8 ermöglichen.

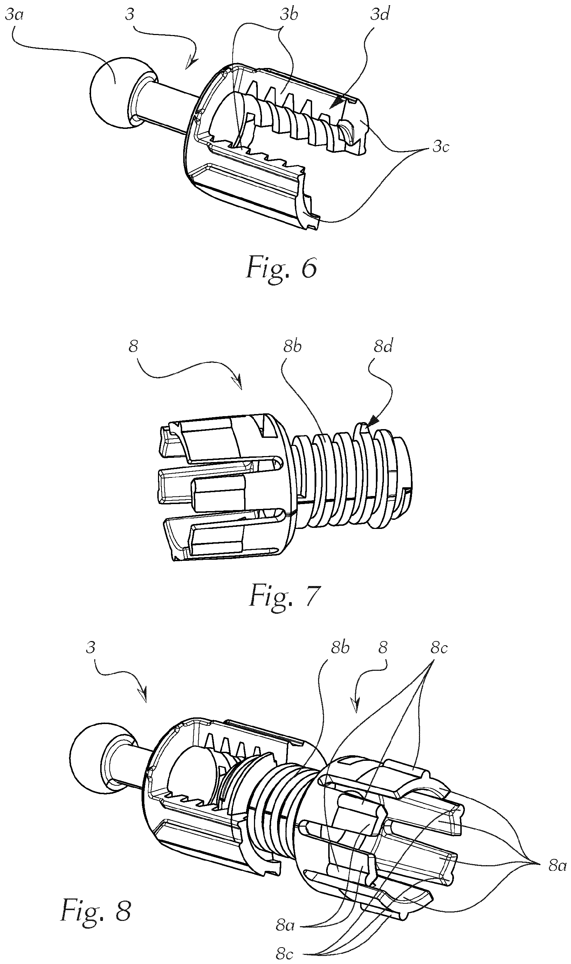

Das Übertragungselement 8 ist mit dem Stellelement 3 über eine aus zwei Verbindungsabschnitten bestehende Verbindung in Form einer Gewindeverbindung ausgeführt ist, wobei das Übertragungselement 8 einen ersten Verbindungsabschnitt in Form eines Gewindeabschnittes 8b und das Stellelement 3 einen dazu korrespondierenden zweiten Verbindungsabschnitt in Form eines Gegengewindeabschnittes 3b aufweist. Der Gegengewindeabschnitt 3b des Stellelements 3 ist im montierten Zustand auf den Gewindeabschnitt 8b des Übertragungselements 8 aufgeschraubt. Der Maximalhub des Stellelements 3 in Bezug auf das Übertragungselement 8 wird einerseits durch eine Stirnfläche 3c des Stellelements 3 und eine dazu korrespondierende, an dem Übertragungselement 8 angeordnete und in den Figuren nicht näher dargestellte Aufstandsfläche und andererseits durch einen an dem Übertragungselement 8 angeordneten Gewindevorsprung 8d (siehe Fig. 7) sowie eine in dem Stellelement 3 vorgesehen Gewindeverengung 3d (siehe Fig. 6) begrenzt sind. Gemeinsam bilden die Stirnfläche 3c, die Aufstandsfläche, der Gewindevorsprung 8d sowie das die Gewindeverengung 3d mechanische Anschläge, die dazu geeignet sind, den Maximalhub des Stellelements 3 in Bezug auf das Übertragungselement 8 in einfacher Weise zu begrenzen.

Das Drehelement 6 weist in einem außerhalb der Öffnung 6a liegenden Bereich eine Verzahnung 6d, insbesondere ein Tellerrad auf, wobei das Kegelritzel 4 zum Eingriff in die Verzahnung 6d eingerichtet ist. Die Drehachse des Kegelritzels 4 ist so zur Verschubachse x orientiert, dass das Kegelritzel 4 eines Scheinwerfers, der in einem Fahrzeug verbaut ist, weiterhin leicht zugänglich ist. Generell kann die Drehachse des Kegelritzels 4 einen beliebigen Winkel in Bezug auf die Verschubachse x aufweisen. Erfahrungsgemäß ist es allerdings vorteilhaft, wenn die Drehachse des Kegelritzels 4 einen Winkel zwischen 80° und 100° in Bezug auf die Verschubachse x einnimmt. In einer besonders bevorzugten Ausführungsform ist die Drehachse des Kegelritzels normal zur Verschubachse x orientiert. Das Kegelritzel 4 ist in dem Gehäuse 2 gelagert und mittels eines oberhalb des Gehäuses 2 und liegendem Dichtrings 12 abgedichtet, sodass keine Flüssigkeit von einem Außenbereich über das Kegelritzel 4 bzw. dessen Lagerung in ein Scheinwerfergehäuse eindringen kann, in welchem die Einstellvorrichtung 11 verbaut ist.

Fig. 4 zeigt eine Schnittdarstellung der Einstellvorrichtung 11, in der die zuvor diskutierte Rastvorrichtung 10 besonders gut erkennbar ist.

Fig. 5 zeigt eine perspektivische Darstellung einzelner Bauteile der Einstellvorrichtung 11. Darin ist ein an dem Stellelement 3 angeordnetes Führungsmittel 3e gut erkennbar, das jeweils an zwei eine konzentrische Öffnung begrenzenden Zungen angeordnet ist, wobei sich die Zungen in Achsrichtung erstrecken und an ihrer der Öffnung zugewandten Seite den Gegengewindeabschnitt 3b ausbilden. Die Führungsmittel 3e sind durch längliche Vertiefungen begrenzt, die sich ebenso in Achsrichtung erstrecken, wobei die Führungselemente 3e und oder die Vertiefungen dazu eingerichtet sind, in das Gehäuse 2 oder in einen beliebigen anderen im Bezug zur Verschubachse x drehfesten Bereich anzugreifen. Dadurch wird eine Drehbewegung des Stellelements 3 in einfacher Weise unterbunden und eine gleichzeitige Verschiebbarkeit entlang der Verschubachse x ermöglicht.

Fig. 6 und 7 zeigen perspektivische Darstellungen des Stellelements 3. Ergänzend dazu ist in Fig. 8 das mit dem Stellelement 3 verkoppelte Übertragungselement 8 dargestellt.

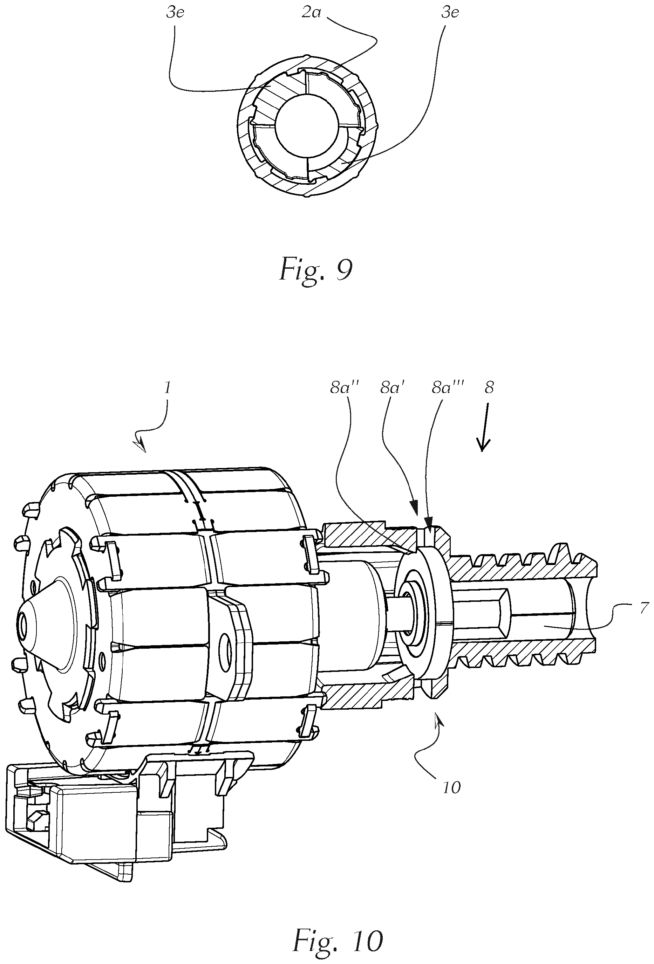

Fig. 9 zeigt eine Schnittdarstellung des in dem Gehäuse 2 aufgenommenen Stellelements 3, wobei darin deutlich erkennbar ist, dass die Führungsmittel 3e in Ausnehmungen festgehalten sind, die in einem Halteabschnitt 2a des Gehäuses 2 ausgebildet sind. Der Halteabschnitt 2a ist zu diesem Zwecke im Wesentlichen zylindrisch ausgebildet sowie konzentrisch zur Verschubachse x angeordnet und weist an seiner Innenseite eine zu den Führungsmitteln 3e korrespondierende Kontur auf.
Fig. 10 zeigt eine perspektivische Teilschnittdarstellung der Einstellvorrichtung 11, bei welcher das Übertragungselement 8 auf das Aktorelement 7 des Stellmotors bereits aufgeklemmt ist.
Fig. 11 verdeutlicht den Einbauvorgang des Drehelements 6 in das Gehäuse 2. Das Gehäuse 2 ist vorzugsweise im Wesentlichen halbschalenförmig ausgebildet, wobei ein Lagerabschnitt 6e Drehelement 6 in einem innerhalb des Gehäuses angeordneten Halbschalenlager 2e drehbar gelagert ist und gleichzeitig gegen eine Verschiebung entlang der Verschubachse x gesichert wird.
Fig. 12 zeigt eine perspektivische Darstellung der Einstellvorrichtung 11, welche in einem beispielhaften Scheinwerfergehäuse 13 verbaut ist, wobei das Scheinwerfergehäuse 13 nur teilweise dargestellt ist. Das Gehäuse 2 ist darin mitsamt dem Stellmotor über die eingangs beschriebenen Befestigungslaschen 9' und 9", die einander im eingebauten Zustand überlappen, mittels einer Schraubverbindung mit dem Scheinwerfergehäuse 13 verbunden und somit ortsfest innerhalb des Scheinwerfergehäuses 13 festgehalten. Das Kegelritzel 4 ragt aus dem Scheinwerfergehäuse 13 hervor und ist mittels dem Dichtring 12 dergestalt abgedichtet, sodass ein Wassereintritt in das Scheinwerfergehäuse 13 unterbunden werden kann.

In Anbetracht dieser Lehre kann die Erfindung gemäß den vorliegende Ansprüchen dem Fachmann bekannter Weise abgeändert werden und ist daher nicht auf die gezeigte Ausführungsform beschränkt. Auch können einzelne Aspekte der Erfindung aufgegriffen und weitgehend miteinander kombiniert werden.

## Patentansprüche

1. Einstellvorrichtung (11) zur Einstellung eines optisch relevanten Bauteils eines Fahrzeugscheinwerfers, aufweisend
- ein mittels eines Stellmotors (1) entlang einer Verschubachse (x) verschiebbares Aktorelement (7),
- ein mit dem Aktorelement (7) verbundenes, zur Verschiebung entlang der Verschubachse (x) eingerichtetes und um die Verschubachse (x) drehbar gelagertes Übertragungselement (8),
- ein mit dem Übertragungselements (8) mittels einer Verbindung (8b, 3b) in mechanischem Eingriff stehendes Stellelement (3), wobei das Stellelement (3) dazu eingerichtet ist, an dem optisch relevanten Bauteil anzugreifen, und
- ein zur Drehung des Übertragungselements (8) eingerichtetes, um die Verschubachse (x) drehbar gelagertes Drehelement (6),
wobei die das Übertragungselement (8) mit dem Stellelement (3) verbindende Verbindung (8b, 3b) dazu eingerichtet ist, eine Drehbewegung des Übertragungselements (8) in eine Schiebebewegung des Stellelements (3) entlang der Verschubachse (x) zu wandeln, wobei das Übertragungselement (8) zumindest teilweise in einer im Wesentlichen kreisförmigen konzentrisch zur Verschubachse (x) angeordneten Öffnung (6a) des Drehelements (6) aufgenommen ist, **dadurch gekennzeichnet, dass** das Übertragungselement (8) elastische Mittel (8a) aufweist, die am Umfang eines fiktiven, konzentrisch zur Verschubachse (x) angeordneten Kreises angeordnet sind und sich entlang der Verschubachse (x) erstrecken, wobei die elastischen Mittel (8a) Vorsprünge (8c) aufweisen, die dazu eingerichtet sind, in innerhalb der Öffnung (6a) angeordnete korrespondierende Vertiefungen (6c) einzugreifen, wobei vorzugsweise die elastischen Mittel (8a) zungenartig ausgebildet sind, wobei vorzugsweise die Vorsprünge (8c) in Form von achsparallelen Zapfen ausgeführt sind und die dazu korrespondierenden Vertiefungen (6c) vorzugsweise als achsparallele Rillen ausgeführt sind.

2. Einstellvorrichtung (11) nach Anspruch 1, **dadurch gekennzeichnet, dass** das Stellelement (3), das Übertragungselement (8) und das Drehelement (6) koaxial zur Verschubachse (x) angeordnet sind.

3. Einstellvorrichtung (11) nach einem der Ansprüche 1 oder 2, **dadurch gekennzeichnet, dass** die die das Übertragungselement (8) mit dem Stellelement (3) verbindende Verbindung (8b, 3b) in Form einer Gewindeverbindung ausgeführt ist, wobei das Übertragungselement (8) einen Gewindeabschnitt (8b) und das Stellelement (3) einen dazu korrespondierenden Gegengewindeabschnitt (3b) aufweist.

4. Einstellvorrichtung (11) nach einem der Ansprüche 1 bis 3, **dadurch gekennzeichnet, dass** das Stellelement (3) Führungsmittel (3e) aufweist, die das Stellelement (3) gegen ein Verdrehen um die Verschubachse (x) sichern.

5. Einstellvorrichtung (11) nach einem der Ansprüche 1 bis 4, **dadurch gekennzeichnet, dass** die Drehbewegung des Übertragungselements (8) mittels mechanischer Anschläge (3c, 3d, 8d) begrenzt ist.

6. Einstellvorrichtung (11) nach einem der Ansprüche 1 bis 5, **dadurch gekennzeichnet, dass** der Stellmotor (1), das Aktorelement (7), das Übertragungselement (8), das Drehelement (6) und das Stellelement (3) zumindest teilweise innerhalb eines Gehäuses (2) aufgenommen sind.

7. Einstellvorrichtung (11) nach Anspruch 6, **dadurch gekennzeichnet, dass** das Gehäuse (2) im Wesentlichen halbschalenförmig ausgebildet ist, wobei vorzugsweise das Drehelement (6) in einem innerhalb des Gehäuses (2) angeordneten Halbschalenlager (2e) gelagert ist.

8. Einstellvorrichtung (11) nach Anspruch 6 oder 7, **dadurch gekennzeichnet, dass** das Stellelement (3) Führungsmittel (3e) aufweist, die das Stellelement (3) gegen ein Verdrehen um die Verschubachse (x) sichern, wobei die Führungsmittel (3e) in zu den Führungsmitteln (3e) korrespondierenden, innerhalb des Gehäuses (2) angeordneten Ausnehmungen und/oder Vorsprünge eingreifen.

9. Einstellvorrichtung (11) nach einem der Anspruche 6 bis 8, **dadurch gekennzeichnet, dass** der Stellmotor (1) sowie das Gehäuse (2) jeweils zumindest eine, vorzugsweise zwei Befestigungslaschen (9', 9") aufweisen, wobei die Befestigungslaschen (9', 9") des Gehäuses (2) und des Stellmotors (1) einander in einem eingebauten Zustand der Einstellvorrichtung (11) überlappen.

10. Einstellvorrichtung (11) nach einem der Ansprüche 1 bis 9, **dadurch gekennzeichnet, dass** das Übertragungselement (8) und/oder das Aktorelement (7) eine Rastvorrichtung (10) zur Verbindung des Übertragungselements (8) mit dem Aktorelement (7) aufweist.

11. Einstellvorrichtung (11) nach einem der Ansprüche 1 bis 10, **dadurch gekennzeichnet, dass** das Stellelement (3) zum Eingriff an dem optisch relevanten Bauteil eines Scheinwerfers einen Kopplungsbereich (3a) aufweist, der vorzugsweise durch einen konzentrisch zur Verschubachse (x) angeordneten Kugelkopf gebildet ist.

12. Einstellvorrichtung (11) nach einem der Ansprüche 1 bis 11, **dadurch gekennzeichnet, dass** das Drehelement (6) in einem außerhalb der Öffnung (6a) liegenden Bereich eine Verzahnung (6d), insbesondere ein Tellerrad aufweist, wobei vorzugsweise ein Kegelritzel (4) zum Eingriff in die Verzahnung (6d) vorgesehen ist und besonders bevorzugt die Drehachse des Kegelritzels (4) im Wesentlichen normal zur Verschubachse (x) orientiert ist.

13. Einstellvorrichtung (11) nach Anspruch 12, **dadurch gekennzeichnet, dass** der Stellmotor (1), das Aktorelement (7), das Übertragungselement (8), das Drehelement (6) und das Stellelement (3) zumindest teilweise innerhalb eines Gehäuses (2) aufgenommen sind, wobei das Kegelritzel (4) in dem Gehäuse (2) gelagert ist, wobei vorzugsweise das Kegelritzel (4) mittels eines oberhalb des Gehäuses (2) liegendem Dichtrings (4) umschlossen ist.

14. Einstellvorrichtung (11) nach einem der Ansprüche 1 bis 13, **dadurch gekennzeichnet, dass** das Stellelement (3) aus PA 6.6 hergestellt ist und/oder das Drehelement (6) aus PBT mit einem Gewichtsanteil von ca. 20 bis 40 % Glasfaser hergestellt ist, und/oder das Übertragungselement (8) aus POM hergestellt ist, und/oder das Gehäuse (2) aus PBT mit einem Gewichtsanteil von ca. 20 bis 40 % Glasfaser hergestellt ist und/oder das Kegelritzel (4) aus PA 6 mit einem Gewichtsanteil von ca. 20 bis 40% Glasfaser hergestellt ist.

15. Fahrzeugscheinwerfer, mit einer Einstellvorrichtung nach einem der Ansprüche 1 bis 14.

## Claims

1. An adjustment device (11) for adjusting an optically relevant component of a vehicle headlamp, comprising
- an actuator element (7), which is displaceable along a displacement axis (x) by means of an actuator motor (1),
- a transmission element (8) connected to the actuator element (7), designed for displacement along the displacement axis (x), and mounted rotatably about the displacement axis (x),
- an adjustment element (3) mechanically engaged with the transmission element (8) by means of a connection (8b, 3b), wherein the adjustment element (3) is designed to act on the optically relevant component, and
- a rotary element (6), which is designed to rotate the transmission element (8) and which is mounted rotatably about the displacement axis (x), wherein the connection (8b, 3b) connecting the transmission element (8) to the adjustment element (3) is designed to convert a rotary movement of the transmission element (8) into a sliding movement of the adjustment element (3) along the displacement axis (x), wherein the transmission element (8) is received at least in part in a substantially circular opening (6a) of the rotary element (6) arranged concentrically with the displacement axis (x), **characterised in that** the transmission element (8) has resilient means (8a) which are arranged at the periphery of a virtual circle arranged concentrically with the displacement axis (x) and extend along the displacement axis (x), wherein the resilient means (8a) have protrusions (8c) which are designed to engage in corresponding indentations (6c) arranged within the opening (6a), wherein the resilient means (8a) are preferably formed in a tongue-like manner, wherein the protrusions (8c) are preferably embodied in the form of axis-parallel pins and the indentations (6c) corresponding thereto are preferably embodied as axis-parallel grooves.

2. The adjustment device (11) according to claim 1, **characterised in that** the adjustment element (3), the transmission element (8), and the rotary element (6) are arranged coaxially with the displacement axis (x).

3. The adjustment device (11) according to either one of claims 1 or 2, **characterised in that** the connection (8b, 3b) connecting the transmission element (8) to the adjustment element (3) is embodied in the form of a threaded connection, wherein the transmission element (8) has a thread portion (8b) and the adjustment element (3) has a counter thread portion (3b) corresponding thereto.

4. The adjustment device (11) according to any one of claims 1 to 3, **characterised in that** the adjustment element (3) has guide means (3e) which secure the adjustment element (3) against rotation about the displacement axis (x).

5. The adjustment device (11) according to any one of claims 1 to 4, **characterised in that** the rotary movement of the transmission element (8) is delimited by means of mechanical stops (3c, 3d, 8d) .

6. The adjustment device (11) according to any one of claims 1 to 5, **characterised in that** the actuator motor (1), the actuator element (7), the transmission element (8), the rotary element (6), and the adjustment element (3) are received at least partly within a housing (2).

7. The adjustment device (11) according to claim 6, **characterised in that** the housing (2) is substantially half-shell-shaped, wherein the rotary element (6) is preferably mounted in a half-shell bearing (2e) arranged within the housing (2).

8. The adjustment device (11) according to claim 6 or 7, **characterised in that** the adjustment element (3) has guide means (3e), which secure the adjustment element (3) against a rotation about the displacement axis (x), wherein the guide means (3e) engage in recesses and/or protrusions corresponding to the guide means (3e) and arranged within the housing (2).

9. The adjustment device (11) according to any one of claims 6 to 8, **characterised in that** the actuator motor (1) and the housing (2) each have at least one, preferably two fastening tabs (9', 9"), wherein the fastening tabs (9', 9'') of the housing (2) and of the actuator motor (1) overlap one another when the adjustment device (11) is in an installed state.

10. The adjustment device (11) according to any one of claims 1 to 9, **characterised in that** the transmission element (8) and/or the actuator element (7) has a catch device (10) for connecting the transmission element (8) to the actuator element (7).

11. The adjustment device (11) according to any one of claims 1 to 10, **characterised in that** the adjustment element (3) has a coupling region (3a) for engagement on the optically relevant component of a headlamp, which coupling region is formed preferably by a spherical head arranged concentrically with the displacement axis (x).

12. The adjustment device (11) according to any one of claims 1 to 11, **characterised in that** the rotary element (6), in a region disposed outside the opening (6a), has a toothing (6d), in particular a crown wheel, wherein a bevel gear (4) is preferably provided for engagement in the toothing (6d) and the rotation axis of the bevel gear (4) is particularly preferably oriented substantially normal to the displacement axis (x).

13. The adjustment device (11) according to claim 12, **characterised in that** the actuator motor (1), the actuator element (7), the transmission element (8), the rotary element (6), and the adjustment element (3) are received at least partly within a housing (2), wherein the bevel gear (4) is mounted in the housing (2), wherein the bevel gear (4) is preferably enclosed by means of a ring seal (4) disposed above the housing (2).

14. The adjustment device (11) according to any one of claims 1 to 13, **characterised in that** the adjustment element (3) is made of PA 6.6 and/or the rotary element (6) is made of PBT with a proportion by weight of approximately 20 to 40% glass fibres, and/or the transmission element (8) is made of POM, and/or the housing (2) is made of PBT with a proportion by weight of approximately 20 to 40 % glass fibres, and/or the bevel gear (4) is made of PA 6 with a proportion by weight of approximately 20 to 40 % glass fibres.

15. A vehicle headlamp comprising an adjustment device according to any one of claims 1 to 14.

## Revendications

1. - Dispositif de réglage (11) pour le réglage d'un composant optiquement pertinent d'un phare de véhicule, présentant
- un élément d'actionnement (7) déplaçable le long d'un axe de déplacement (x) au moyen d'un moteur de réglage (1) ;
- un élément de transmission (8) relié à l'élément d'actionnement (7), agencé pour le déplacement le long de l'axe de déplacement (x) et monté de manière à pouvoir tourner autour de l'axe de déplacement (x) ;
- un élément de réglage (3) se trouvant en prise mécanique avec l'élément de transmission (8) au moyen d'une liaison (8b, 3b), l'élément de réglage (3) étant agencé de façon à attaquer le composant optiquement pertinent ; et
- un élément tournant (6) monté à rotation autour de l'axe de déplacement (x), agencé pour la rotation de l'élément de transmission (8),
la liaison (8b, 3b) reliant l'élément de transmission (8) à l'élément de réglage (3) étant agencée de façon à convertir un déplacement en rotation de l'élément de transmission (8) en un déplacement en coulissement de l'élément de réglage (3) le long de l'axe de déplacement (x), l'élément de transmission (8) étant reçu au moins partiellement dans une ouverture (6a) de l'élément tournant (6) disposée sensiblement de façon circulaire concentriquement à l'axe de déplacement (x), **caractérisé par le fait que** l'élément de transmission (8) présente des moyens élastiques (8a), lesquels sont disposés sur la circonférence d'un cercle fictif disposé concentriquement à l'axe de déplacement (x) et s'étendent le long de l'axe de déplacement (x), les moyens élastiques (8a) présentant des saillies (8c) qui sont agencées de façon à s'engager dans des creux correspondants (6c) disposés à l'intérieur de l'ouverture (6a), les moyens élastiques (8a) étant de préférence configurés sous forme de languettes, les saillies (8c) étant de préférence réalisées sous forme de tenons parallèles à l'axe et les creux correspondants (6c) étant réalisés de préférence en tant que rainures parallèles à l'axe.

2. - Dispositif de réglage (11) selon la revendication 1, **caractérisé par le fait que** l'élément de réglage ((3), l'élément de transmission (8) et l'élément tournant (6) sont disposés coaxialement à l'axe de déplacement (x).

3. - Dispositif de réglage (11) selon l'une des revendications 1 ou 2, **caractérisé par le fait que** la liaison (8b, 3b) reliant l'élément de transmission (8) à l'élément de réglage (3) est réalisé sous la forme d'une liaison filetée, l'élément de transmission (8) présentant une section filetée (8b) et l'élément de réglage (3) présentant une contre-section filetée (3b) correspondant à celle-ci.

4. - Dispositif de réglage (11) selon l'une des revendications 1 à 3, **caractérisé par le fait que** l'élément de réglage (3) présente des moyens de guidage (3) qui assurent l'élément de réglage (3) contre une rotation autour de l'axe de déplacement (x).

5. - Dispositif de réglage (11) selon l'une des revendications 1 à 4, **caractérisé par le fait que** le déplacement en rotation de l'élément de transmission (8) est limité au moyen de butées mécaniques (3c, 3d, 8d).

6. - Dispositif de réglage (11) selon l'une des revendications 1 à 5, **caractérisé par le fait que** le moteur de réglage (1), l'élément d'actionnement (7), l'élément de transmission (8), l'élément tournant (6) et l'élément de réglage (3) sont reçus au moins partiellement à l'intérieur d'un boîtier (2) .

7. - Dispositif de réglage (11) selon la revendication 6, **caractérisé par le fait que** le boîtier (2) est réalisé sensiblement sous la forme d'une demi-coque, l'élément tournant (6) étant de préférence monté dans un palier de demi-coque (2) disposé à l'intérieur du boîtier (2) .

8. - Dispositif de réglage (11) selon l'une des revendications 6 ou 7, **caractérisé par le fait que** l'élément de réglage (3) présente des moyens de guidage (3) qui assurent l'élément de réglage (3) contre une rotation autour de l'axe de déplacement (x), les moyens de guidage (3) s'engageant dans des creux et/ou des saillies disposés à l'intérieur du boîtier (2), correspondant aux moyens de guidage (3).

9. - Dispositif de réglage (11) selon l'une des revendications 6 à 8, **caractérisé par le fait que** le moteur de réglage (1) ainsi que le boîtier (2) présentent respectivement au moins une, de préférence deux pattes de fixation (9', 9"), les pattes de fixation (9', 9'') du boîtier (2) et du moteur de réglage (1) se chevauchant mutuellement dans un état monté du dispositif de réglage (11) .

10. - Dispositif de réglage (11) selon l'une des revendications 1 à 9, **caractérisé par le fait que** l'élément de transmission (8) et/ou l'élément d'actionnement (7) présentent un dispositif d'encliquetage (10) pour la liaison de l'élément de transport (8) à l'élément actionneur (7) .

11. - Dispositif de réglage (11) selon l'une des revendications 1 à 10, **présente par le fait que** l'élément de réglage (3) présente une zone de couplage (3a) pour l'engagement sur le composant optiquement pertinent d'un phare, laquelle zone de couplage est formée de préférence par une tête sphérique disposée concentriquement à l'axe de déplacement (x).

12. - Dispositif de réglage (11) selon l'une des revendications 1 à 11, **caractérisé par le fait que** l'élément tournant (6) présente une denture (6d) dans une zone se trouvant à l'extérieur de l'ouverture (6a), en particulier une couronne dentée, un pignon conique étant de préférence prévu pour l'engagement dans la denture (6d) et, de manière particulièrement préférée, l'axe de rotation du pignon conique (4) étant orienté sensiblement perpendiculairement à l'axe de déplacement (x).

13. - Dispositif de réglage (11) selon la revendication 12, **caractérisé par le fait que** le moteur de réglage (1), l'élément d'actionnement (7), l'élément de transmission (8), l'élément tournant (6) et l'élément de réglage (3) sont reçus au moins partiellement à l'intérieur d'un boîtier (2), le pignon conique (4) étant monté dans le boîtier (2), le pignon conique (4) étant de préférence enfermé à l'aide d'une bague d'étanchéité (12) se situant au-dessus du boîtier (2).

14. - Dispositif de réglage (11) selon l'une des revendications 1 à 13, **caractérisé par le fait que** l'élément de réglage (3) est fait de PA 6.6 et/ou l'élément tournant (6) est fait de PBT ayant une proportion en poids d'environ 20 à 40 % de fibres de verre, et/ou l'élément de transport (8) est fait de POM, et/ou le boîtier (2) est fait de PBT ayant une proportion en poids d'environ 20 à 40 % de fibres de verre et/ou le pignon conique (4) est fait de PA 6 ayant une proportion en poids d'environ 20 à 40 % de fibres de verre.

15. - Phare de véhicule, comportant un dispositif de réglage selon l'une des revendications 1 à 14.
